# EUROPEAN PATENT APPLICATION

(11) **EP 2 838 059 A1**
(43) Date of publication of application: **18.02.2015**
(21) Application number: 13775805.8
(22) Date of filing: 11.04.2013
(51) Int. Cl.: G06Q 10/06, G06Q 50/10

(54) **GOODS YARD STRUCTURE CONTROL METHOD AND APPARATUS**

(30) Priority: 12.04.2012 CN 201210106633
(71) Applicant: Beijing Jingdong Century Trading Co., Ltd., Beijing 100176 (CN)
(72) Inventor: QIAN, Kun, Beijing 100176 (CN)
(74) Representative: Dantz, Jan Henning
(86) International application number: PCT/CN2013/074108
(87) International publication number: WO 2013/152734

(57) **Abstract**

The present invention provides a goods yard structure control method and device capable of improving shelving efficiency of goods arrived and utilization of manual labor. The method comprises: determining busyness of staff based on a ratio of an amount of goods arrived to be shelved to a current number of the staff in a goods yard; if the busyness is above a first preset value, then outputting an instruction for controlling the goods to be shelved randomly; if the busyness is between the first preset value and a second preset value, determining a sale popularity level to which the goods belong and then outputting an instruction for controlling the goods to shelved to a shelf corresponding to the sale popularity level of the goods; and if the busyness is below the second preset value, determining a sale popularity level to which the goods belong and then judging whether a current remaining space of a shelf corresponding to pre-selected goods of a higher sale popularity level is enough to accommodate the arrived goods of the higher sale popularity level, if so, then outputting an instruction for controlling the goods to be shelved to the shelf corresponding to the sale popularity level of the goods, and otherwise adjusting the goods on the shelf.

## Description

### FIELD OF INVENTION

The present invention relates to a goods yard structure control method and Device.

### BACKGROUND

With the social development, the circulation of commodities has been increasing, and so has the dealer's consumption of warehouse resources been. So it is necessary to utilize the space of a goods yard more effectively. The usual practice in the aspect of goods yard structure control at present is that staff responsible for unloading place received goods randomly on shelves in a goods yard which has plenty of shelves, and then staff responsible for goods adjustment place the goods on a designated shelf and register the location of the shelf on which the goods are shelved in a computer for managing the goods in the goods yard. When fetching the goods, the shelf on which the goods are located can be looked up for in the computer.

The problem of the current practice mainly lies in that the shelving efficiency of goods arrived and utilization of manual labor are low. So there is a need to provide a goods yard structure control method.

### SUMMARY OF INVENTION

In view of the above, the present invention is to provide a goods yard control method and device that is capable of improving the shelving efficiency of goods arrived and utilization of manual labor.

In order to fulfill the aforesaid object, according to one aspect of the present invention, a goods yard structure control method is provided.

The goods yard structure control method according to the present invention comprises: determining busyness of staff based on a ratio of an amount of goods arrived to be shelved to a current number of the staff in a goods yard; if the busyness is above a first preset value, outputting an instruction for controlling the goods to be shelved randomly; if the busyness is between the first preset value and a second preset value, determining a sale popularity level to which the goods belong and then outputting an instruction for controlling the goods to be shelved to a shelf corresponding to the sale popularity level of the goods, wherein the first preset value is greater than the second preset value; if the busyness is below the second preset value, determining a sale popularity level to which the goods belong, and then judging whether a current remaining space of a shelf corresponding to pre-selected goods of a higher sale popularity level is enough to accommodate the arrived goods of the higher sale popularity level; if so, then outputting an instruction for controlling the goods to be shelved to the shelf corresponding to the sale popularity level of the goods; otherwise, determining goods of a lower sale popularity level to be withdrawn from a shelf according to a preset strategy and then outputting an instruction for controlling the goods of the lower sale popularity to be withdrawn from the shelf and outputting an instruction for controlling the goods of the higher sale popularity level to be shelved to the shelf on which the goods of the lower sale popularity level were shelved prior to being withdrawn.

Optionally, the shelf corresponding to the sale popularity level of the goods is determined according to a criterion that a higher sale popularity level corresponds to a shelf nearer to an exit of the goods yard.

Optionally, after outputting an instruction for controlling the goods of the higher sale popularity level to be shelved to the shelf on which the goods of the lower sale popularity level were shelved prior to being withdrawn, the method further comprises outputting an instruction for controlling the goods of the lower sale popularity level to be shelved to a designated shelf.

Optionally, the determining the sale popularity level to which the goods belong comprises: obtaining the sale popularity level to which the goods belong based on the correspondence between an amount of goods sold, a preset amount of goods sold, and the sale popularity level.

Optionally, the determining the sale popularity level to which the goods belong comprises: obtaining the sale popularity level to which the goods belong based on the correspondence between the number of visits to the goods on a designated website, a preset number of visits to the goods on the designated website, and the sale popularity level.

Optionally, the determining the sale popularity level to which the goods belong comprises: obtaining the sale popularity level to which the goods belong based on the correspondence between the sales revenue of the goods, a preset sales revenue of the goods, and the sale popularity level.

According to another aspect of the invention, a goods yard structure control device is provided.

The goods yard structure control device according to the present invention comprises: a computing module for determining busyness of staff based on a ratio of an amount of goods arrived to be shelved to a current number of the staff in a goods yard; a first control module for outputting, when the busyness is above a first preset value, an instruction for controlling the goods to be shelved randomly; a second control module for determining, when the busyness is between the first preset value and a second preset value, a sale popularity level to which the goods belong, and then outputting an instruction for controlling the goods to be shelved to a shelf corresponding to the sale popularity level of the goods, wherein the first preset value is greater than the second preset value; a third control module for determining, when the busyness is below the second preset value, a sale popularity level to which the goods belong and then judging whether a current remaining space of a shelf corresponding to pre-selected goods of a higher sale popularity level is enough to accommodate the arrived goods of the higher sale popularity level, if so, then outputting an instruction for controlling the goods to be shelved to the shelf based on the sale popularity level of the goods; otherwise, determining goods of a lower sale popularity level to be withdrawn from a shelf according to a preset strategy and then outputting an instruction for controlling the goods of the lower sale popularity to be withdrawn from the shelf and outputting an instruction for controlling the goods of the higher sale popularity level to be shelved to the shelf on which the goods of the lower sale popularity level were shelved prior to being withdrawn.

Optionally, the second control module is further used for determining the shelf corresponding to the sale popularity level of the goods according to a criterion that a higher sale popularity level corresponds to a shelf nearer to an exit of the goods yard.

Optionally, a third control module is further comprised for controlling the goods of the lower sale popularity level to be shelved to a designated shelf.

Optionally, the second control module and the third control module are further used for obtaining the sale popularity level to which the goods belong based on the correspondence between an amount of goods sold, a preset amount of goods sold, and the sale popularity level.

Optionally, the second control module and the third control module are further used for obtaining the sale popularity level to which the goods belong based on the correspondence between the number of visits to the goods on a designated website, a preset number of visits to the goods on the designated website, and the sale popularity level.

Optionally, the second control module and the third control module are further used for obtaining the sale popularity level to which the goods belong based on the correspondence between the sales revenue of the goods, a preset sales revenue of the goods, and the sale popularity level.

According to the technical solution of the present invention, when the staff in the goods yard are busy, goods are unloaded as fast as possible. When the busyness of the staff in the goods yard is moderate, the goods are assigned to designated shelves. When the staff in the goods yard are relatively idle, the goods on the shelves are adjusted. The sale popularity levels of the goods are considered in the aforesaid process. By adopting the technical solution of the embodiments of the present invention, in addition to recording the locations of the goods, the computer in the goods yard is further capable of controlling the goods yard structure via efficient and fast computations so as to make the goods to be shelved reasonably based on the busyness of the staff, which reduces as far as possible the workload for secondary goods adjustments, and facilitates good delivery. Thus, the goods yard improves its operation efficiency and performance as a whole.

### BRIEF DESCRIPTION OF THE DRAWINGS

The drawings are used for better understanding the present invention, and do not constitute inappropriate limitations of the present invention.
FIG. 1 is a schematic diagram of main steps of a goods yard structure control method in accordance with an embodiment of the present application.
FIG. 2 is a schematic diagram of a basic structure of a goods yard structure control device in accordance with an embodiment of the present application.

### DETAILED DESCRIPTION OF THE PREFERRED EMBODIMENTS

The exemplary embodiments of the present invention are depicted below with reference to the drawings, wherein various details of the embodiments of the present invention are included for better understanding and thus shall be deemed to be exemplary only. So an ordinary person skilled in the art shall understand that a variety of modifications and alterations can be made to the embodiments depicted herein, resulting in no deviation from the scope and spirit of the present invention. Similarly, for the sake of clarity and conciseness, depictions of commonly known functions and structures are omitted in the description below.

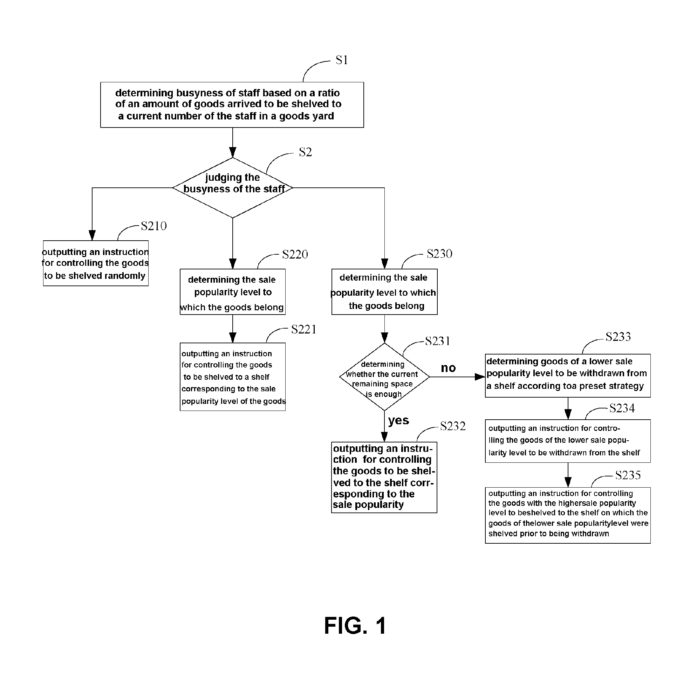

FIG. 1 is a schematic diagram of main steps of a goods yard structure control method in accordance with an embodiment of the present application.

As shown in FIG. 1, the goods yard structure control method in accordance with the embodiment of the present invention can be executed by a computer for managing goods in a goods yard. The method is depicted below in detail.

First, determining busyness of staff in the goods yard, i.e., Step S1: determining busyness of staff based on a ratio of an amount of goods arrived to be shelved to the current number of the staff members in the goods yard.

The amount of goods arrived to be shelved can be known in advance based on the purchasing and stocking plans. In practice, there are other ways for obtaining an amount of goods arrived to be shelved, e.g., a delivery note sent by logistics staff.

It can be easily appreciated that, if the ratio of the amount of goods arrived to be shelved to the current number of staff in the goods yard is a relatively large numerical value, it implies that the staff in the goods yard are relatively busy. Two preset values can be set according to experience, wherein a first preset value is greater than a second preset value. A goods yard structure control mode is determined according to the relation in magnitude between the current busyness of the staff and the two preset values.

The process enters Step S2 of judging the busyness of the staff after Step S1.

If it is judged in Step S2 that the busyness of the staff is above the first preset value, the process enters Step S210 of outputting an instruction for controlling the goods to be shelved randomly. The instruction can be sent to a light indicator in the goods yard so that the light indicator displays the text "shelve randomly". Alternatively, other modes capable of notifying the staff in the goods yard can be used.

The aforesaid practice mainly takes into account the fact that the staff in the goods yard are quite busy and have no time to shelve the goods to a shelf planned in advance and can only unload the goods as fast as possible. The location of the goods will be adjusted when the staff in the goods yard have time. The mode of adjusting will be described later.

If it is judged in Step S2 that the busyness of the staff is between the first preset value and the second present value, it indicates that the busyness of the staff is moderate, and then the process enters Step S220. In this case, the goods arrived can be shelved to a designated shelf so that no succeeding goods adjustment is needed.

In the embodiment, the goods are classified according to their popularity in sales and the shelves are divided into a plurality of groups. Goods of different sale popularity levels correspond to different groups of shelves. The shelves can be painted in different colors to indicate the groups to which they belong, or numbered with serial numbers written on the shelves.

In Step S220, the sale popularity level to which the goods belong is determined. The sale popularity level of the goods can be determined according to different criteria. For example, the sale popularity level of the goods can be characterized by using an amount of goods sold, or alternatively by the number of visits on a designated website for the goods, or alternatively by sales revenue of the goods.

If an amount of goods sold is used for characterizing the sale popularity level of the goods, the sale popularity level to which the goods belong can be obtained based on the correspondence between the amount of goods sold, a preset amount of goods sold, and the sale popularity level.

If of the number of visits on a designated website for the goods is used for characterizing the sale popularity level of the goods, the sale popularity level to which the goods belong can be obtained based on the correspondence between the number of visits, a preset number of visits on a designated website for the goods, and the sale popularity level.

If sales revenue of goods is used for characterizing the sale popularity level of the goods, the sale popularity level to which the goods belong can be obtained based on the correspondence between the sales revenue, a preset sales revenue of the goods, and the sale popularity level.

After the sale popularity level to which the goods belong is determined, an instruction for controlling the goods to be shelved to a shelf corresponding to the sale popularity level of the goods can be output (Step S221). The instruction can include color or the serial number of the shelf. Likewise, the instruction can be output to a light indicator or the like device.

If one sale popularity level of goods corresponds to a plurality of shelves, an occupancy rate of each shelf can be judged prior to outputting an instruction, and an identifier of a shelf with a low occupancy rate, e.g., the color or serial number of the shelf, can be included in the instruction.

Controlling the shelving location of the goods according to the sale popularity level of the goods is helpful for forming a relatively reasonable goods yard structure, reducing as far as possible the workload of secondary goods adjustment, thereby improving shelving efficiency of the goods arrived, alleviating the manual labor of the staff in the goods yard, and improving utilization of manual labor.

For convenient delivery of goods, when controlling the locations for shelving the goods, a higher sale popularity level can be made to correspond to a shelf nearer to the exit of the goods yard.

If it is found that staff in the goods yard are relatively idle, some adjustment can be made to the goods yard structure. In the embodiment, if it is judged in Step S2 that the busyness of staff is below the second preset value, the process enters Step S230. It indicates that the staff in the goods yard are relatively idle at present, and the goods yard structure can be adjusted using this opportunity.

First, the sale popularity level to which the goods belong is determined (Step S230), and then from the goods arrived some goods of a higher sale popularity level are pre-selected to judge whether the current remaining space of the shelf corresponding to them is large enough to accommodate these arrived goods of the higher sale popularity level (Step S231). If so, then the goods are shelved directly, i.e., an instruction for controlling the goods to be shelved to the shelf corresponding to the sale popularity level of the goods is output (Step S232); otherwise, goods of a lower sale popularity level to be withdrawn from a shelf are determined based on a preset strategy (Step S233).

The preset strategy can be determined flexibly. For example, the sale popularity level of the goods can likewise be characterized by an amount of goods sold, or alternatively by the number of visits to the goods on a designated website, or alternatively by sales revenue of the goods. Optionally, for convenience in future delivery, from among the goods with a lower sale popularity level, goods on a shelf nearer to the exit of the goods yard are selected as goods to be withdrawn from shelves in priority. Alternatively, from the aspect of shelves, if the sale popularity level of goods on the shelves in a specific area as a whole is low, all the goods on these shelves can be withdrawn from the shelves , to be substituted with goods of a higher sale popularity level. Or, if the stocking rate of the shelves in a particular area is relatively low, goods on these shelves can be withdrawn. Obviously, the amount of work for withdrawing the goods from these shelves is limited.

Following Step S233, an instruction for controlling the goods of the lower sale popularity level to be withdrawn from the shelf is output (Step S234). Then an instruction is output for controlling the goods with the higher sale popularity level to be shelved to the shelf on which the goods of the lower sale popularity level were shelved prior to being withdrawn (Step S235).

A goods yard structure control device in accordance with an embodiment of the present invention is depicted below.

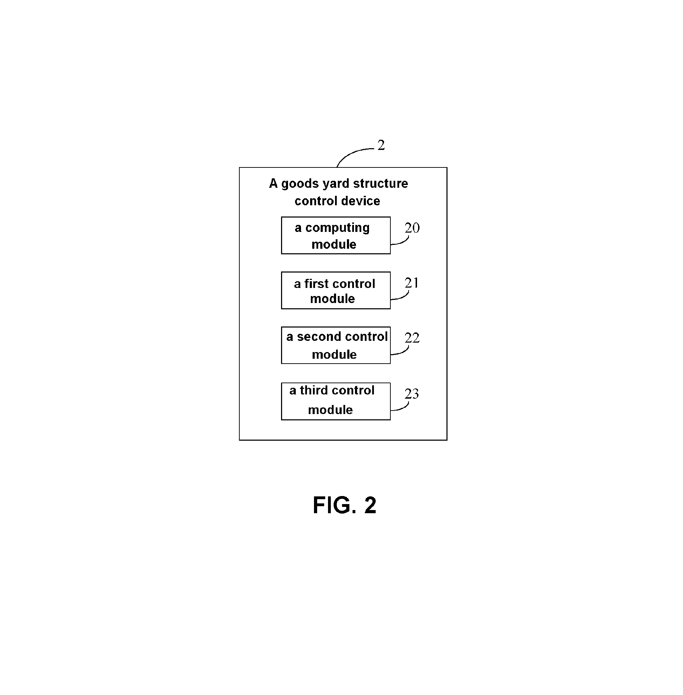

The goods yard structure control device in accordance with the embodiment of the present invention can be implemented with software that is provided in a computer for managing goods in the goods yard. FIG. 2 is a schematic diagram of a basic structure of the goods yard structure control device in an embodiment of the present invention. As shown in FIG. 2, the goods yard structure control device 2 mainly comprises a computing module 20, a first control module 21, a second control module 22, and a third control module 23.

The computing module 20 is used for determining busyness of staff based on a ratio of an amount of goods arrived to be shelved to a current number of the staff in a goods yard.

The first control module 21 is used for, when the busyness is above a first preset value, outputting an instruction for controlling the goods to be shelved randomly.

The second control module 22 is used for, when the busyness is between the first preset value and a second preset value, determining a sale popularity level to which the goods belong, and then outputting an instruction for controlling the goods to be shelved to a shelf corresponding to the sale popularity level of the goods, wherein the first preset value is greater than the second preset value.

The third control module 23 is used for, when the busyness is below the second preset value, determining a sale popularity level to which the goods belong and then judging whether a current remaining space of a shelf corresponding to pre-selected goods of a higher sale popularity level is enough to accommodate the goods arrived of the higher sale popularity level; if so, outputting an instruction for controlling the goods to be shelved to the shelf corresponding to the sale popularity level of the goods; otherwise, determining goods of a lower sale popularity level to be withdrawn from a shelf based on a preset strategy and then outputting an instruction for controlling the goods of the lower sale popularity to be withdrawn from the shelf and further outputting an instruction for controlling the goods of the higher sale popularity level to be shelved to the shelf on which the goods of the lower sale popularity level were shelved prior to being withdrawn.

The second control module 22 can further be used for determining the shelf corresponding to the sale popularity level of the goods according to a criterion that a higher sale popularity level corresponds to a shelf nearer to an exit of the goods yard.

The goods yard control device 2 as shown in FIG. 2 can further comprise a third control module (not shown), which is used for outputting an instruction for controlling the goods of the lower sale popularity level to be shelved to a designated shelf.

The second control module 22 and the third control module can further be used for obtaining the sale popularity level to which the goods belong based on the correspondence between an amount of goods sold, a preset amount of goods sold, and the sale popularity level.

The second control module 22 and the third control module can further be used for obtaining the sale popularity level to which the goods belong based on the correspondence between the number of visits to the goods on a designated website, a preset number of visits to the goods on the designated website, and the sale popularity level.

The second control module 22 and the third control module can be further used for obtaining the sale popularity level to which the goods belong based on the correspondence between the sales revenue, a preset sales revenue of the goods, and the sale popularity level.

According to the technical solution of the embodiments of the present invention, when the staff in the goods yard are busy, goods should be unloaded as fast as possible. When the busyness of the staff in the goods yard is moderate, the goods should be assigned to designated shelves. When the staff in the goods yard are relatively idle, the goods on the shelves should be adjusted. The sale popularity levels of the goods are considered in the aforesaid process. Therefore, by adopting the technical solution of the embodiments of the present invention, in addition to recording the locations of the goods, the computer in the goods yard is further capable of controlling the goods yard structure via efficient and fast computation so as to make the goods to be shelved be assigned reasonably based on the busyness of the staff, reduce as far as possible the workload for secondary goods adjustment, and facilitate shipment. Thus, the goods yard improves its operation efficiency and performance as a whole.

The basic principle of the present invention is depicted above with reference to the specific embodiments. However, it is understandable to an ordinary skilled person that all and any steps or components of the method and device according to the present invention can be implemented with hardware, firmware, software or the combination thereof in any computing devices (including a processor, a storage medium, etc.) or a network of computing devices. This can be carried out by an ordinary person skilled in the art with their basic programming skills upon the study of the depictions of the present invention.

So the object of the present invention can be implemented alternatively by running a program or a set of programs on any computing devices. The computing device can be a well-known generic device. Therefore, the object of the present invention can be implemented alternatively by program products including program codes for implementing the methods or devices noted above. That is, such program products also constitute the prevent invention, and so does storage mediums on which such program products are stored. Obviously, the storage mediums can be any known storage mediums or any storage mediums to be developed in the future.

Furthermore, it should be noted that in the device and method of the present invention, obviously each component and each step can be decomposed and/or recombined. The decompositions and/or recombinations shall be deemed to be an equivalent solution of the present invention. Besides, the steps of the aforesaid series of processing can be performed following a temporal sequence naturally according to the depicted sequence, but it is not required to follow the temporal sequence. Some steps can be performed in parallel or independent of each other.

The aforesaid specific embodiments do not constitute limitation of the protection extent of the present invention. A person skilled in the art shall understand that, depending on design requirements and other factors, a variety of modifications, combinations, sub-combinations and substitutions are allowable. Any modifications, equivalent substitutions, improvements, etc. within the spirit and principle of the present invention shall be included in the protection extent of the present invention.

## Claims

1. A goods yard structure control method, **characterized in that** the method comprises:
determining busyness of staff based on a ratio of an amount of goods arrived to be shelved to a current number of the staff in a goods yard;
if the busyness is above a first preset value, outputting an instruction for controlling the goods to be shelved randomly;
if the busyness is between the first preset value and a second preset value, determining a sale popularity level to which the goods belong and then outputting an instruction for controlling the goods to be shelved to a shelf corresponding to the sale popularity level of the goods, wherein the first preset value is greater than the second preset value;
if the busyness is below the second preset value, determining a sale popularity level to which the goods belong, and then judging whether a current remaining space of a shelf corresponding to pre-selected goods of a higher sale popularity level is enough to accommodate the arrived goods of the higher sale popularity level, if so, then outputting an instruction for controlling the goods to be shelved to the shelf corresponding to the sale popularity level of the goods; otherwise, determining goods of a lower sale popularity level to be withdrawn from a shelf according to a preset strategy and outputting an instruction for controlling the goods of the lower sale popularity to be withdrawn from the shelf and further outputting an instruction for controlling the goods of the higher sale popularity level to be shelved to the shelf on which the goods of the lower sale popularity level are shelved prior to being withdrawn.

2. The goods yard structure control method according to claim 1, **characterized in that** the shelf corresponding to the sale popularity level of the goods is determined according to a criterion that a higher sale popularity level corresponds to a shelf nearer to an exit of the goods yard.

3. The goods yard structure control method according to claim 1, **characterized in that**, after outputting an instruction for controlling the goods of the higher sale popularity level to be shelved to the shelf on which the goods of the lower sale popularity level were shelved prior to being withdrawn, the method further comprises:
outputting an instruction for controlling the goods of the lower sale popularity level to be shelved to a designated shelf.

4. The goods yard structure control method according to claim 1, 2 or 3, **characterized in that** the determining the sale popularity level to which the goods belong comprises: obtaining the sale popularity level to which the goods belong based on the correspondence between an amount of goods sold, a preset amount of goods sold, and the sale popularity level.

5. The goods yard structure control method according to claim 1, 2 or 3, **characterized in that** the determining the sale popularity level to which the goods belong comprises: obtaining the sale popularity level to which the goods belong based on the correspondence between the number of visits to the goods on a designated website, a preset number of visits to the goods on the designated website, and the sale popularity level.

6. The goods yard structure control method according to claim 1, 2 or 3, **characterized in that** the determining the sale popularity level to which the goods belong comprises: obtaining the sale popularity level to which the goods belong based on the correspondence between the sales revenue of the goods, a preset sales revenue of the goods, and the sale popularity level.

7. A goods yard structure control device, **characterized in that** the device comprises:
a computing module for determining busyness of staff based on a ratio of an amount of goods arrived to be shelved to a current number of the staff in a goods yard;
a first control module for outputting, when the busyness is above a first preset value, an instruction for controlling the goods to be shelved randomly;
a second control module for determining, when the busyness is between the first preset value and a second preset value, a sale popularity level to which the goods belong, and then outputting an instruction for controlling the goods to be shelved to a shelf corresponding to the sale popularity level of the goods, wherein the first preset value is greater than the second preset value;
a third control module for determining, when the busyness is below the second preset value, a sale popularity level to which the goods belong, and then judging whether a current remaining space of a shelf corresponding to pre-selected goods of a higher sale popularity level is enough to accommodate the arrived goods of the higher sale popularity level, if so, then outputting an instruction for controlling the goods to be shelved to the shelf corresponding to the sale popularity level of the goods; otherwise, determining goods of a lower sale popularity level to be withdrawn from a shelf according to a preset strategy, and then outputting an instruction for controlling the goods of the lower sale popularity to be withdrawn from the shelf and outputting an instruction for controlling the goods of the higher sale popularity level to be shelved to the shelf on which the goods of the lower sale popularity level were shelved prior to being withdrawn.

8. The goods yard structure control device according to claim 7, **characterized in that** the second control module is further used for determining the shelf corresponding to the sale popularity level of the goods according to a criterion that a higher sale popularity level corresponds to a shelf nearer to an exit of the goods yard.

9. The goods yard structure control device according to claim 7, **characterized in** further comprising a third control module for controlling the goods of the lower sale popularity level to be shelved to a designated shelf.

10. The goods yard structure control device according to claim 7, 8 or 9, **characterized in that** the second control module and the third control module are further used for obtaining the sale popularity level to which the goods belong based on the correspondence between an amount of goods sold, a preset amount of goods sold, and the sale popularity level.

11. The goods yard structure control device according to claim 7, 8 or 9, **characterized in that** the second control module and the third control module are further used for obtaining the sale popularity level to which the goods belong based on the correspondence between the number of visits to the goods on a designated website, a preset number of visits to the goods on the designated website, and the sale popularity level.

12. The goods yard structure control device according to claim 7, 8 or 9, **characterized in that** the second control module and the third control module are further used for obtaining the sale popularity level to which the goods belong based on the correspondence between the sales revenue of the goods, a preset sales revenue of the goods, and the sale popularity level.
